# EUROPÄISCHE PATENTSCHRIFT

(11) **EP 0 676 016 B1**
(45) Veröffentlichungstag und Bekanntmachung des Hinweises auf die Patenterteilung: **12.03.1997**
(21) Anmeldenummer: 94904062.0
(22) Anmeldetag: 30.12.1993
(51) Int. Cl.: F16H 1/32, F16H 1/24

(54) **GETRIEBE ZUR ÜBERTRAGUNG EINER DREHBEWEGUNG**
GEAR FOR TRANSMITTING A ROTARY MOVEMENT
TRANSMISSION PERMETTANT DE TRANSMETTRE DES MOUVEMENTS ROTATIFS

(30) Priorität: 31.12.1992 CS 40499/92
(43) Veröffentlichungstag der Anmeldung: 11.10.1995
(73) Patentinhaber: HERSTEK, Josef, 086 42 Hernik (SK); JANEK, Bartolomej, 08001 Presov (SK)
(72) Erfinder: HERSTEK, Josef, 086 42 Hernik (SK); JANEK, Bartolomej, 08001 Presov (SK)
(74) Vertreter: Jeck, Anton, Dipl.-Ing.
(86) Internationale Anmeldenummer: SK9300005
(87) Internationale Veröffentlichungsnummer: WO9416242

(56) Entgegenhaltungen:
- EP-A- 0 211 687
- DE-C- 912 412
- US-A- 4 394 112

## Beschreibung

Die Erfindung betrifft ein Getriebe zur Übertragung einer Drehbewegung nach dem Oberbegriff des Anspruches 1.

Getriebe der eingangs genannten Art sind bekannt und z.B. in der EP-A 211 687 beschrieben. Dabei sind zylinderförmige Mitnehmer vorgesehen, die sowohl mit der Innenverzahnung als auch mit der Außenverzahnung der miteinander zusammenarbeitenden Zahnräder in Eingriff bringbar sind. Es handelt sich also um separate Mitnehmer, die in die Verzahnung des jeweiligen Zahnrades eingreifen. Hier liegt jedoch ein Linienkontakt zwischen den Mitnehmern und den Zähnen vor, da die Querschnitte der Mitnehmer und der Zähne unterschiedlich sind. Dies hat zur Folge, daß die Zähne immer beansprucht und dabei sehr belastet werden, was zu vorzeitigem Verschleiß sowohl der Zähne als auch der Mitnehmer führen kann. Ferner ist in der DE-A 912 412 ein Stirnradgetriebe mit Wälzkörper-Kraftübertragung durch Kugel bzw. Kugeln /Rollen offenbart. Eine Innen- und eine Außenverzahnung im Sinne der Erfinder sind nicht offenbart. Dabei ist von Bedeutung, daß im bekannten Falle jeweils allenfalls zwei Paare miteinander zusammenarbeiten, und zwar in Form von Kugel/Kugel oder Kugel/Zylinder. Ein weiterer Nachteil dieses Getriebes besteht in der Größe der Kraftübertragung der miteinander zusammenarbeitenden Paare (Kugel/Kugel bzw. Kugel/Zylinder), wo die Kraft punktuell übertragen wird. Dies führt ebenfalls zu früherem Verschleiß der Mitnehmer. Schließlich ist in der US-A 4 394 112 ein hydraulischer Motor dargestellt, bei dem das Innen- und das Außenzahnrad mit zylindrischen Mitnehmern bestückt sind. Dabei sind die Zahnräder so zueinander angeordnet, daß jederzeit eine dichte Trennung der Kammern des hydraulischen Motors gewährleistet ist. Aufgrund dieser Tatsache kommt es im Kontaktbereich der Zylinderpaare zu hohen Kantenspannungen, die die Kraftübertragung der miteinander zusammenarbeitenden Zylinderpaare merklich beeinträchtigen.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Weitere zweckmäßige und vorteilhafte Maßnahmen der Erfindung sind in den abhängigen Ansprüchen angegeben.

Die äußere Verzahnung des Treibrades besteht aus austauschbaren Mitnehmern mit kreisrundem Querschnitt, die in axial sich erstreckenden und am Außenumfang des Treibrades ausgebildeten Aufnahmen gelagert sind, wobei diese Aufnahmen am Außenumfang gleichmäßig verteilt sind. Die Innenverzahnung besteht aus austauschbaren Mitnehmern mit kreisrundem Querschnitt, die in axial sich erstreckenden und am Innenumfang angeordneten Aufnahmen des Zahnrades gelagert sind und gleichmäßigen Abstand zueinander aufweisen. Die Aufnahmen der Zahnräder haben einen kreisbogenförmigen oder gotischen Querschnitt.

In ihrem Sitzbereich sind die Aufnahmen mit Schmiernuten versehen, die zur Bildung einer Schmierschicht beitragen. Die Mitnehmer der Zahnräder sind Walzen mit linearem oder auf beiden Seiten wenig modifiziertem Profil. Dabei weisen alle Mitnehmer des angetriebenen Zahnrades und alle Mitnehmer des treibenden Zahnrades in einer gemeinsamen radialen Schnittebene den gleichen Querschnitt auf. Die Mitnehmer der Zahnräder sind in den Aufnahmen drehbar gelagert. Die Aufnahmen können mit Auskleidungen versehen sein, die geeignete Wälzeigenschaft und hinreichende Festigkeit aufweisen. Die Differenz in der Zähnezahl der Innenverzahnung und der Außenverzahnung ist von der Übersetzung abhängig. Die Mitnehmer des angetriebenen Zahnrades können auch in modifizierter Form ausgebildet sein. Dabei sind sie aus Hülsen gebildet, die auf Zapfen mit kleinem Spiel gelagert sind. An ihren beiden axialseitigen Endseiten sind die Hülsen fixiert. Durch den Einsatz austauschbarer Mitnehmer bei beiden Zahnrädern ist es möglich, die Mitnehmer nach Überschreitung ihrer Lebensdauer bzw. bei Beschädigung derselben durch neue zu ersetzen. Somit wird eine extrem lange Lebensdauer der Zahnräder erreicht. Durch die separate Herstellung der Mitnehmer und der Grundkörper der Zahnräder können vorgesehene und optimale Werkstoffe ohne Einschränkung gewählt werden. So werden z. B. die Mitnehmer aus Werkstoffen hergestellt, deren Härte 58-65 HRC beträgt, was erlaubt, die Mitnehmer mit extrem hohen Drücken zu belasten. Demgegenüber kann der Grundkörper des Zahnrades aus Werkstoffen mit hoher Zähigkeit gewählt werden. Für die Mitnehmer kann die einfachste geometrische Form gewählt werden, um eine hohe durchschnittliche Genauigkeit, hohe Formgenauigkeit und die erforderliche Rauhigkeit der Oberfläche zu erreichen. Eine hohe durchschnittliche Genauigkeit kann darüber hinaus durch Auswahl (Sortieren) der Mitnehmer erhöht werden. Die getrennte Herstellung der Mitnehmer und der Grundkörper ermöglichen eine hohe Herstellungsgenauigkeit, wobei die Abweichungen der Zylindrizität (0) < 0,8 µm und der Rauhigkeit im Bereich von Ra = 0,05-0,1 µm liegen. Die genannten Vorzüge, nämlich die hohe maßliche Genauigkeit, die hohe Formgenauigkeit und die hohe Qualität der Oberfläche haben einen wichtigen Einfluß auf eine kontinuierliche Mitnahme und somit auch auf den kontinuierlichen Lauf des Getriebes. Ferner ergibt sich daraus eine proportionale Distribution der Belastung zwischen mehreren zusammenarbeitenden Mitnehmerpaaren, eine hohe kinematische Laufgenauigkeit sowie eine hohe Festigkeit der Verzahnung. Durch die WahL der zylindrischen Mitnehmer ist es möglich, diese in den entsprechenden Aufnahmen drehbar zu lagern, wodurch weitere Vorteile erreichbar sind. Im Bereich der hohen Konzentrationen von Kontaktspannungen zwischen zusammenarbeitenden Mitnehmerpaaren werden Friktionen abgebaut und in Bereiche mit niedrigen Spannungen, d.h. in Berührungsbereiche der Elemente und der Aufnahmen, verlagert. Dies hat zur Folge, daß die Verzahnung weniger abgenutzt wird, und zwar nicht zuletzt auch wegen der Tatsache, daß die Mitnehmer aus sehr hartem Werkstoff hergestellt werden können. Die lokale Belastung der Ritzel-Zähne wird abgebaut und auf den Umfang der Mitnehmer transformiert. Dies hat entscheidenden Einfluß auf die Verlängerung der Lebensdauer der Mitnehmer. Ferner werden im Kontaktbereich der Mitnehmer Kantenspannungen abgebaut, und zwar dadurch, daß an den Enden der Mitnenmer des Ritzels oder des angetriebenen Zahnrades geringfügige Änderungen vorgenommen werden. Die separate Anordnung der Zähne führt darüber hinaus zur Dämpfung von Schwingungen der belasteten Übersetzung, da zwischen den Mitnehmern und ihren Lagern ein Schmierfilm gebildet ist, der eine erhebliche Dämpfwirkung aufweist. Bei Zusammenwirken der äußeren Mitnehmer des Ritzels mit den inneren Mitnehmern des angetriebenen Zahnrades steht bereits bei minimaler Belastung eine beachtliche Anzahl der Mitnehmerpaare in Wirkverbindung, und zwar an der belasteten Seite des Mitnehmerzweiges. Ihre Anzahl steigt mit ansteigendem Belastungsmoment des Ritzels. Dies hat zur Folge, daß die Belastbarkeit des jeweiligen Zahnradpaares wächst. Gleichzeitig wächst progressiv auch die Festigkeitscharakteristik der Übersetzung. Alle oben genannten Vorteile werden bei gleichzeitiger Verringerung des technologischen und finanziellen Aufwandes bei der Herstellung der zylindrischen Verzahnung erreicht, und zwar als Folge dessen, daß die herkömmlichen integrierten Zähne durch austauschbare Mitnehmer mit einfacher geometrischer Form ersetzt werden. Diese (Mitnehmer) sind als Massenprodukte mit hoher Genauigkeit und kostengünstig herstellbar und werden regelmäßig als Walzelemente bei Wälzlagern eingesetzt.

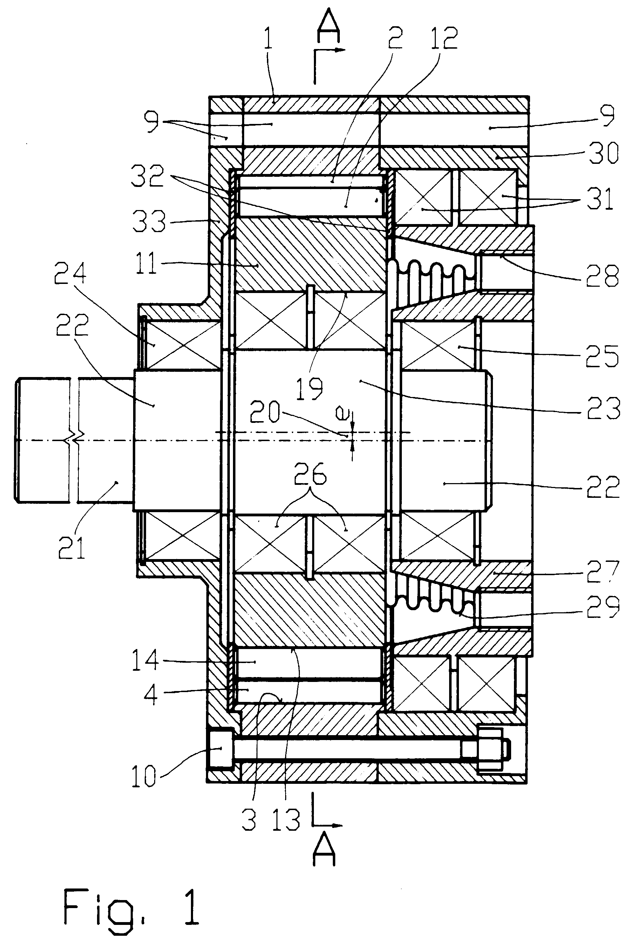

Ein Ausführungsbeispiel der Erfindung ist in der Zeichnung schematisch dargestellt und wird im folgenden näher erläutert. Es zeigen
- Fig. 1: ein Getriebe im Querschnitt,

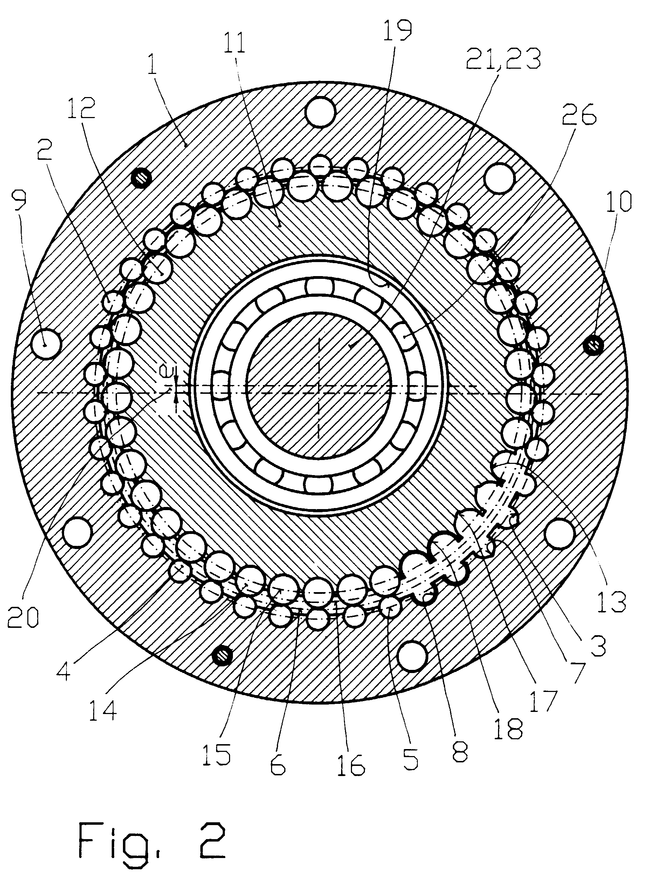

- Fig. 2: einen Schnitt entlang der Linie A-A nach Fig. 1,

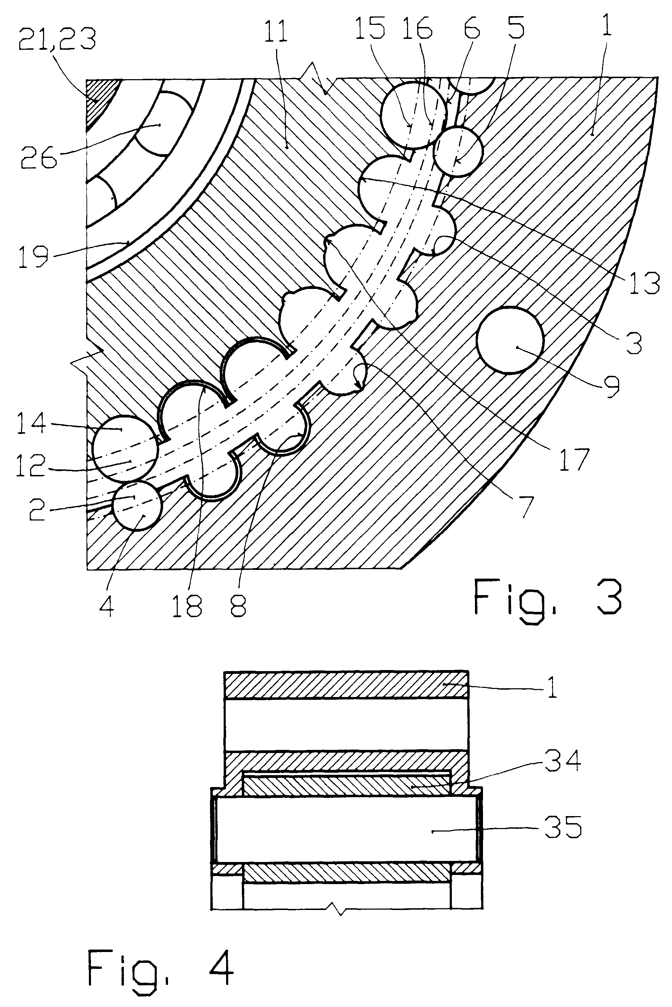

- Fig. 3: einen Teil nach Fig. 2 vergrößert dargestellt und
- Fig. 4: einen Mitnehmer in Achsialschnitt.

Die Figuren zeigen, daß das treibende Zahnrad (Treibrad) 11 mit einer Außenverzahnung 12 versehen ist, die aus Mitnehmern 14 besteht. Hierbei sind die Mitnehmer 14 aus nadelförmigen Walzen mit leicht modifiziertem Profil gebildet. An ihren Enden sind die Mitnehmer in Aufnahmen 13 gelagert. Die Aufnahmen 13 sind am Außenumfang eines Teilungskreises 15 gleichmäßig angeordnet. Die Mitnehmer 14 sind in den Aufnahmen 13 drehbar gelagert und gegen Radialbewegungen gesichert. Dies wird dadurch erreicht, daß die Aufnahmen 13 die Mitnehmer 14 um mehr als 180° umgreifen. Das Zahnrad 1 ist mit einer Innenverzahnung 2 versehen, die von Mitnehmern 4 gebildet ist. Die Mitnehmer 4 bestehen ebenfalls aus nadelförmigen Walzen mit linearem Profil und sind in Aufnahmen 3 gelagert. Die Aufnahmen 3 sind auf einem zentrischen Teilungskreis 5 gleichmäßig verteilt. Die Mitnehmer 4 sind in den Aufnahmen 3 drehbar gelagert und gleichzeitig gegen Radialbewegungen gesichert. Dabei umgreifen die Aufnahmen 3 die Mitnehmer 4 eng und um mehr als 180°. Um eine Schmierschicht zwischen den Mitnehmern und den Aufnahmen bilden zu können, sind die Aufnahmen 3,13 mit Schmiernuten 7,17 versehen. Alle Mitnehmer 14 des Treibrades 11 haben den gleichen Durchmesser. Das Gleiche gilt auch für alle Mitnehmer 4 des Zahnrades 1. Im Hinblick auf das Mitnehmer-Verhältnis ist der Durchmesser der Mitnehmer 14 größer als der Durchmesser der Mitnehmer 4. Dabei ist die Anzahl der Mitnehmer 14 des Zahnrades 11 um eins geringer als die Anzahl der Mitnehmer 4 des Zahnrades 1. In axialer Richtung ist die Bewegung der Mitnehmer 4,14 durch seitliche Unterlagen 32 beschränkt. Das Zahnrad 11 ist in bezug auf das Zahnrad 1 durch eine konstante Entfernung der Achsen, nämlich einer Exzentrizität (e), gebunden, die dem radialen Abstand 20 der Achse des Kurbelteils 23 gegenüber der Achse des konzentrischen Teils 22 der Kurbelwelle 21 entspricht. Die Kurbelwelle 21 ist links über das erste konzentrische Teil 22 im linken Lager 24 und im Flansch 33 gelagert. Das rechte konzentrische Teil 22 der Kurbelwelle ist im rechten Lager 25 und einer langsamlaufenden Welle 27 gelagert. Der Flansch 33 ist mit dem Zahnrad 1 drehfest verbunden. Die langsamlaufende Welle 27 ist im Körper 30 über ein langsamlaufendes Lager 31 gelagert, wobei der Körper mit dem Zahnrad 1 drehfest verbunden ist. Das Zahnrad 11 besitzt eine Zentralöffnung 19 und ist am exzentrischen Teil 23 der Kurbelwelle 21 über ein Lager 26 gelagert. Die drehbar gelagerte Kurbelwelle 21 bringt das Zahnrad 11 in schnellaufende und exzentrische Bewegung. Gleichzeitig zwingt die Innenverzahnung 2 des Zahnrades 1, die mit der Außenverzahnung 12 zusammenarbeitet, das Zahnrad 11 auf einem Wälzkreis 16 rutschfrei abzuwälzen, der auf einem Wälzkreis 6 des Zahnrades 1 wälzt bzw. rollt. Diese schnellaufende exzentrische Bewegung und gleichzeitige langsamlaufende Rotationsbewegung des Zahnrades 11 ist mittels eines elastischen Körpers 21 in eine langsamlaufende zentrische Rotationsbewegung einer langsamtreibenden Welle 27 transformiert. Die langsamlaufende Welle 27 ist mit einer angetriebenen Einheit über Ankergewinde 28 verbunden, und über Ankeröfnungen 9 ist das Zahnrad 1 an einer Basis befestigt. In kompakter Form ist das Getriebe mit Befestigungsschrauben 10 versehen.

Das vorgeschlagene Getriebe ist insbesondere für Differenzübertragunssysteme vorgesehen, bei denen minimales Spiel, hohe kinematische Genauigkeit, ruhiger und leiser Lauf, hohe Festigkeit und geringe energetische Verluste, hohe spezifische Leistung, extrem lange Lebensdauer und niedrige Herstellungskosten vorausgesetzt werden.

## Patentansprüche

1. Getriebe zur Übertragung einer Drehbewegung mit einem angetriebenen Zahnrad (1) mit einer Innenverzahnung (2), die mit einer Außenverzahnung (12) eines treibenden Zahnrades (11) trieblich verbunden ist, wobei die parallel zueinander verlaufenden Achsen der Zahnräder (1, 11) einen konstanten Abstand voneinander aufweisen,
dadurch gekennzeichnet,
daß die Innenverzahnung (2) und die Außenverzahnung (12) aus austauschbaren und in Aufnahmen (3, 13) angeordneten Mitnehmern (4, 14) mit kreisrundem Querschnitt bestehen, wobei die Aufnahmen (3, 13) und die Mitnehmer (4, 14) in ihrem Kontaktbereich komplementären Querschnitt aufweisen.

2. Getriebe nach Anspruch 1,
dadurch gekennzeichnet,
daß die Zahnräder (1,11) auf einer Kurbelwelle (21) drehbar gelagert sind.

3. Getriebe nach Anspruch 1 oder 2,
dadurch gekennzeichnet,
daß das Zahnrad (1) auf einem konzentrischen Teil (22) und das Zahnrad (11) auf einem exzentrischen Teil (23) der Kurbelwelle (21) gelagert ist.

4. Getriebe nach einem der Ansprüche 1 bis 3,
dadurch gekennzeichnet,
daß die Drehachse des Zahnrades (11) in bezug auf die Drehachse der Kurbelwelle (21) um eine Exzentrizität (e) versetzt ist, die dem Abstand (20) der Längsmittelsachse der Kurbelwelle (21) von aer Längsmittelachse des exzentrischen Teils (23) entspricht.

5. Getriebe nach einem der Ansprüche 1 bis 4,
dadurch gekennzeichnet,
daß die Mitnehmer (4,14) als Walzen mit linearem oder modifiziertem Profil ausgebildet sind, wobei in einer gemeinsamen Schnittebene alle Mitnehmer (4,14) den gleichen kreisrunden Querschnitt aufweisen.

6. Getriebe nach einem der Ansprüche 1 bis 5,
dadurch gekennzeichnet,
daß die Zähnezahl der Außenverzahnung (12) kleiner ist als die Zähnezahl der Innenverzahnung (2).

7. Getriebe nach einem der Ansprüche 1 bis 6,
dadurch gekennzeichnet,
daß die Aufnahmen (3,13) im radialen Querschnitt ein kreisbogenförmiges oder gotisches Profil besitzen, wobei in radialen Schnittebenen die Aufnahmen (3,13) der jeweiligen Zahnräder (1,11) gleiches Profil aufweisen.

8. Getriebe nach einem der Ansprüche 1 bis 7,
dadurch gekennzeichnet,
daß die Aufnahme (3) und/oder die Aufnahme (13) längsgerichtete Schmiernuten (7,17) besitzt.

9. Getriebe nach einem der Ansprüche 1 bis 8,
dadurch gekennzeichnet,
daß die Aufnahme (3) und/oder die Aufnahme (13) mit Lagerkörpern (8,18) ausgekleidet ist.

10. Getriebe nach einem der Ansprüche 1 bis 9,
dadurch gekennzeichnet,
daß die Mitnehmer (4) aus Hülsen (34) bestehen, die auf Zapfen (35) drehbar gelagert sind.

## Claims

1. Transmission means for transmitting a rotary movement, having a driven toothed wheel (1) provided with an internal toothing (2), which is drivably connected to an external toothing (12) of a driving toothed wheel (11), the axes of the toothed wheels (1, 11) extending parallel to one another and having a constant spacing from one another, characterised in that the internal toothing (2) and the external toothing (12) comprise interchangeable entrainment means (4, 14), which are disposed in receiving means (3, 13) and have a circular cross-section, the receiving means (3, 13) and the entrainment means (4, 14) having complementary cross-sections in their contact region.

2. Transmission means according to claim 1, characterised in that the toothed wheels (1, 11) are rotatably mounted on a crankshaft (21).

3. Transmission means according to claim 1 or 2, characterised in that the toothed wheel (1) is mounted on a concentric part (22) of the crankshaft (21), and the toothed wheel (11) is mounted on an eccentric part (23) of the crankshaft (21).

4. Transmission means according to one of claims 1 to 3, characterised in that the axis of rotation of the toothed wheel (11) is offset relative to the axis of rotation of the crankshaft (21) by an eccentricity (e), which corresponds to the spacing (20) between the central longitudinal axis of the crankshaft (21) and the central longitudinal axis of the eccentric part (23).

5. Transmission means according to one of claims 1 to 4, characterised in that the entrainment means (4, 14) are configured as rollers having a linear or modified profile, all of the entrainment means (4, 14) having the same circular cross-section in a common sectional plane.

6. Transmission means according to one of claims 1 to 5, characterised in that the number of teeth of the external toothing (12) is smaller than the number of teeth of the internal toothing (2).

7. Transmission means according to one of claims 1 to 6, characterised in that the receiving means (3, 13) have an arcuate or gothic profile in the radial cross-section, the receiving means (3, 13) of the respective toothed wheels (1, 11) having the same profile in radial sectional planes.

8. Transmission means according to one of claims 1 to 7, characterised in that the receiving means (3) and/or the receiving means (13) have or has longitudinally orientated lubrication grooves (7, 17).

9. Transmission means according to one of claims 1 to 8, characterised in that the receiving means (3) and/or the receiving means (13) are or is covered with bearing bodies (8, 18).

10. Transmission means according to one of claims 1 to 9, characterised in that the entrainment means (4) comprise sleeves (34), which are rotatably mounted on pins (35).

## Revendications

1. Mécanisme pour la transmission d'un mouvement de rotation avec une roue dentée menée (1) à denture intérieure (2), qui est en liaison de transmission avec une denture extérieure (12) d'une roue dentée menante (11), les axes parallèles des roues dentées (1, 11) présentant une distance constante l'un de l'autre,
caractérisé
en ce que la denture intérieure (2) et la denture extérieure (12) sont constituées par des taquets (4, 14) interchangeables à section transversale circulaire et disposés dans des logements (3, 13), les-logements (3, 13) et les taquets (4, 14) présentant une section transversale complémentaire dans leur zone de contact.

2. Mécanisme de transmission suivant la revendication 1,
caractérisé
en ce que les roues dentées (1, 11) sont montées à rotation sur un vilebrequin (21).

3. Mécanisme de transmission suivant la revendication 1 ou 2,
caractérisé
en ce que la roue dentée (1) est montée sur une partie concentrique (22) et en ce que la roue dentée (11) est montée sur une partie excentrique (23) du vilebrequin (21).

4. Mécanisme de transmission suivant l'une quelconque des revendications de 1 à 3,
caractérisé
en ce que l'axe de rotation de la roue dentée (11) est par rapport à l'axe de rotation du vilebrequin (21) décalée d'une excentricité (e), qui correspond à la distance (20) entre l'axe médian longitudinal du vilebrequin (21) et l'axe médian longitudinal de la partie excentrique (23).

5. Mécanisme de transmission suivant l'une quelconque des revendications de 1 à 4,
caractérisé
en ce que les taquets (4, 14) ont la forme de rouleaux à profil linéaire ou modifié, où tous les taquets (4, 14) présentent la même section transversale circulaire dans un plan de coupe.

6. Mécanisme de transmission suivant l'une quelconque des revendications de 1 à 5,
caractérisé
en ce que le nombre de dents de la denture extérieure (12) est inférieur au nombre de dents de la denture intérieure (3).

7. Mécanisme de transmission suivant l'une quelconque des revendications de 1 à 6,
caractérisé
en ce qu'en section transversale radiale, les logements (3, 13) ont un profil circulaire ou en ogive, les logements (3, 13) des roues dentées intéressées présentant le même profil dans des plans de coupe radiaux.

8. Mécanisme de transmission suivant l'une quelconque des revendications de 1 à 7,
caractérisé
en ce que le logement (3) et/ou le logement (13) présentent des rainures de graissage de direction longitudinale.

9. Mécanisme de transmission suivant l'une quelconque des revendications de 1 à 8,
caractérisé
en ce que le logement (3) et/ou le logement (13) sont équipés d'éléments de palier (8, 18).

10. Mécanisme de transmission suivant l'une quelconque des revendications de 1 à 9,
caractérisé
en ce que les taquets (4) sont constitués par des douilles (34), montées à rotation sur des
